# EUROPÄISCHE PATENTSCHRIFT

(11) **EP 2 359 571 B1**
(45) Veröffentlichungstag und Bekanntmachung des Hinweises auf die Patenterteilung: **02.11.2016**
(21) Anmeldenummer: 08802758.6
(22) Anmeldetag: 26.09.2008
(51) Int. Cl.: H04L 29/08, H04L 29/06, H02J 13/00

(54) **ANORDNUNG MIT EINEM LEITSTELLENGERÄT UND EINER DAMIT IN VERBINDUNG STEHENDEN ANLAGENSTATION SOWIE VERFAHREN ZU DEREN BETRIEB**
ARRANGEMENT HAVING A CONTROL STATION DEVICE AND A SYSTEM STATION CONNECTED THERETO, AND A METHOD FOR OPERATING THE SAME
DISPOSITIF PRÉSENTANT UN APPAREIL DE CENTRE DE COMMANDE ET UNE STATION D'INSTALLATIONS EN LIAISON AVEC CELUI-CI, ET PROCÉDÉ PERMETTANT SON FONCTIONNEMENT

(43) Veröffentlichungstag der Anmeldung: 24.08.2011
(73) Patentinhaber: Siemens Aktiengesellschaft, 80333 München (DE)
(72) Erfinder: ENGLERT, Heiko, 90559 Burgthann (DE); PASTORS, Christof, 91088 Bubenreuth (DE)
(86) Internationale Anmeldenummer: PCT/EP2008/008360
(87) Internationale Veröffentlichungsnummer: WO 2010/034335

(56) Entgegenhaltungen:
- WO-A-2006/017944
- MACKIEWICZ R E: "Overview of IEC 61850 and Benefits" PES TD 2005/2006 MAY 21-24, 2006, PISCATAWAY, NJ, USA,IEEE, PISCATAWAY, NJ, USA, 1. Januar 2006 (2006-01-01), Seiten 376-383, XP031101838 ISBN: 978-0-7803-9194-9

## Beschreibung

Die Erfindung bezieht sich u. a. auf ein Verfahren zum Betreiben einer Anordnung mit einem Leitstellengerät und einer damit in Verbindung stehenden Anlagenstation, die mindestens ein Feldgerät umfasst, wobei bei dem Verfahren das Feldgerät zu dem Leitstellengerät Datentelegramme unter Heranziehung von Stationsbeschreibungsdaten eines die Anlagenstation beschreibenden Stationsbeschreibungsdatensatzes sendet und wobei der Stationsbeschreibungsdatensatz einen die Topologie der Anlagenstation beschreibenden Topologiebeschreibungsteil und einen Gerätebeschreibungsteil, der die zu der Anlagenstation gehörenden Feldgeräte beschreibt, umfasst.

Zum Schützen, Steuern und Überwachen von elektrischen Schalt-oder Energieversorgungsanlagen werden bekanntermaßen Stationsautomatisierungssysteme eingesetzt, die Feldgeräte und Leitstellengeräte umfassen, die zur Erfüllung ihrer Aufgaben untereinander Informationen austauschen. Zum Austausch von Informationsobjekten wird eine vorgegebene Kommunikationstechnologie mit einem Übertragungsmedium und mit einem Kommunikationsprotokoll eingesetzt. Beispielsweise kann bei Stationsautomatisierungssystemen das Kommunikationsprotokoll nach dem IEC 61850-Standard verwendet werden.

Die Kommunikation nach dem IEC 61850-Standard basiert auf dem Austausch von Informationsobjekten, die in den Datenmodellen der eingesetzten Geräte implementiert sind. Die Datenmodelle der Geräte spiegeln die Funktionen aus Sicht der verwendeten Geräte der jeweiligen Hersteller wieder. Da das Strukturieren und der Umfang der Gerätefunktionen von der jeweiligen herstellerspezifischen Funktionsimplementierung bestimmt werden, und da dabei gewisse Freiheitsgrade zugelassen werden, unterscheiden sich die einzelnen Datenmodelle und das daraus resultierende Adressierungsschema der zu übertragenden Informationsobjekte. Bei Geräten unterschiedlicher Hersteller unterscheiden sich somit im Allgemeinen die Adressierungsschemata, obwohl die Geräte vergleichbare Schutz- und Steuerungsfunktionen anbieten.

Aus dem Dokument WO 2006/017944 A ist eine Umsetzung von Daten gemäß unterschiedlicher Standards IEC 61850 und 61970 bekannt.

Darüber hinaus tritt das Problem auf, dass die Betreiber der beschriebenen Anordnungen, also die Kunden der Hersteller der Anlagenstationen, mit einer primär geräteorientierten Adressierung, wie sie von den Herstellern der Anlagenstationen üblicherweise in Form eines fertigen Gerätebeschreibungsteils mitgeliefert wird, mitunter nicht völlig zufrieden sind, weil sie eine funktionsbezogenere Adressierung wünschen, die sich mehr an der Topologie der konkreten Anlage als an den verwendeten Feldgeräten orientiert. Es ist daher in vielen Fällen eine Umparametrierung in Form einer Veränderung des Geräteschreibungsteils des Stationsbeschreibungsdatensatzes nötig, um die kundenseitigen Anforderungen zu erfüllen.

Der Erfindung liegt demgemäß die Aufgabe zugrunde, ein Verfahren zum Betreiben einer Anordnung mit einem Leitstellengerät und einer damit in Verbindung stehenden Anlagenstation, die mindestens ein Feldgerät umfasst, anzugeben, bei dem die beschriebenen Kompatibilitätsprobleme nicht auftreten, zumindest kleiner sind als bei bisherigen Verfahren.

Diese Aufgabe wird erfindungsgemäß durch ein Verfahren mit den Merkmalen gemäß Patentanspruch 1, eine Anordnung mit den Merkmalen gemäß der Patentansprüche 9 oder 10, eine Umsetzeinrichtung mit den Merkmalen gemäß Patentanspruch 12, sowie durch ein Verfahren mit den Merkmalen gemäß Patentanspruch 13 gelöst. Vorteilhafte Ausgestaltungen des erfindungsgemäßen Verfahrens sind in Unteransprüchen angegeben.

Danach ist erfindungsgemäß vorgesehen, dass das Feldgerät die Datentelegramme mit Stationsbeschreibungsdaten eines ersten Stationsbeschreibungsdatensatzes erzeugt, die von dem Feldgerät erzeugten Datentelegramme zu einer Umsetzeinrichtung geleitet werden, und die Umsetzeinrichtung die empfangenen Datentelegramme modifiziert und modifizierte Datentelegramme gemäß einem vorgegebenen zweiten Stationsbeschreibungsdatensatz erzeugt, wobei der Gerätebeschreibungsteil des zweiten Stationsbeschreibungsdatensatzes zumindest eine Gerätebeschreibungsangabe aufweist, die in dem ersten Stationsbeschreibungsdatensatz ausschließlich im Topologiebeschreibungsteil enthalten ist.

Ein wesentlicher Vorteil des erfindungsgemäßen Verfahrens ist darin zu sehen, dass bei diesem eine Umparametrierung der Anlagenstation nicht erforderlich ist, um die Adressierung der Feldgeräte an das betreiberseitig gewünschte Adressierungsschema des Leitstellengeräts anzupassen; denn erfindungsgemäß werden zwei unterschiedliche Adressierungen verwendet, nämlich eine eher topologie- und damit funktionsbezogene für die Kommunikation zwischen Leitstellengerät und Umsetzeinrichtung und eine eher feldgerätbezogene, also weniger funktionsbezogene, für die Kommunikation zwischen Feldgerät und Umsetzeinrichtung.

Ein weiterer wesentlicher Vorteil des erfindungsgemäßen Verfahrens ist darin zu sehen, dass sich der zweite Stationsbeschreibungsdatensatz aus dem ersten Stationsbeschreibungsdatensatz unmittelbar, beispielsweise automatisch, insbesondere rechnergestützt, ableiten lässt; denn der größere Funktionsbezug bzw. Anlagenbezug des zweiten Stationsbeschreibungsdatensatzes beruht auf der Verwertung von Angaben, die bereits in dem ersten Stationsbeschreibungsdatensatz vorhanden sind.

Es ist also möglich, den Wünschen der Anlagenbetreiber nach einer möglichst funktionsbezogenen Adressierung zu entsprechen, indem aus dem vorhandenen gerätebezogenen ersten Stationsbeschreibungsdatensatz ein zweiter Stationsbeschreibungsdatensatz erzeugt wird, der den betreiberseitigen Anforderungen nach größerem Funktionsbezug Rechnung trägt. An dieser Stelle nutzt die Erfindung die Erkenntnis, dass der Topologiebeschreibungsteil des ersten Stationsbeschreibungsdatensatzes in der Regel von den Betreibern der Anlage zumindest in Teilen vorgegeben wird, da diese auch die Topologie der gesamten Anlage bestimmen; werden also die im ersten Stationsbeschreibungsdatensatz vorhandenen Topologiedaten verwertet, so kann damit der Gerätebeschreibungsteil des Stationsbeschreibungsdatensatzes verändert und dessen "Funktionsnähe" erhöht werden.

Gemäß einer bevorzugten Ausgestaltung des Verfahrens ist demgemäß vorgesehen, dass der zweite Stationsbeschreibungsdatensatz durch Modifikation des ersten Stationsbeschreibungsdatensatzes gebildet wird, indem in den Gerätebeschreibungsteil des zweiten Stationsbeschreibungsdatensatzes mindestens eine Angabe aufgenommen wird, die bei dem ersten Stationsbeschreibungsdatensatz ausschließlich in dem Topologiebeschreibungsteil enthalten ist.

Der zweite Stationsbeschreibungsdatensatz kann beispielsweise außerhalb der Umsetzeinrichtung gebildet und anschließend in die Umsetzeinrichtung eingespeist werden. Alternativ kann der zweite Stationsbeschreibungsdatensatz auch von der Umsetzeinrichtung gebildet werden.

Das Bilden des zweiten Stationsbeschreibungsdatensatzes erfolgt vorzugsweise unter Verwendung mindestens einer vorgegebenen Verknüpfungsregel, die eine Verknüpfung zwischen dem ersten Stationsbeschreibungsdatensatz und dem zweiten Stationsbeschreibungsdatensatz definiert.

Bevorzugt wird das Verfahren bei Anordnungen zum Schützen oder Leiten einer elektrischen Schalt- oder Energieversorgungsanlage verwendet.

Der Topologiebeschreibungsteil beschreibt vorzugsweise eine funktionsbezogene geräteunabhängige Adressierung nach dem "Functional-Naming-Adressierungsschema" gemäß IEC 61850-6-Standard. Der Gerätebeschreibungsteil beschreibt vorzugsweise eine geräteabhängige Adressierung nach dem so genannten "Product-Naming-Adressierungsschema" gemäß IEC 61850-Standard. In dem Stationsbeschreibungsdatensatz wird bevorzugt durch zumindest eine Bezugsangabe eine Zuordnung zwischen dem Functional-Naming-Adressierungsschema des Topologiebeschreibungsteils und dem Product-Naming-Adressierungsschema des Gerätebeschreibungsteils definiert.

Das beschriebene Umsetzen von Datentelegrammen unter Verwendung zweier Stationsbeschreibungsdatensätze lässt sich nicht nur für eine Datenübertragung von der Anlagenstation in Richtung Leitstellengerät, sondern auch bei einer Datenübertragung in umgekehrter Richtung einsetzen.

Die Erfindung bezieht sich außerdem auf eine Anordnung mit einem Leitstellengerät und einer damit in Verbindung stehenden Anlagenstation, die mindestens ein Feldgerät umfasst, wobei das Feldgerät geeignet ist, zu dem Leitstellengerät Datentelegramme unter Heranziehung von Stationsbeschreibungsdaten eines die Anlagenstation beschreibenden Stationsbeschreibungsdatensatzes zu senden, und wobei der Stationsbeschreibungsdatensatz einen die Topologie der Anlagenstation beschreibenden Topologiebeschreibungsteil und einen Gerätebeschreibungsteil, der die zu der Anlagenstation gehörenden Feldgeräte beschreibt, umfasst.

Erfindungsgemäß ist diesbezüglich vorgesehen, dass zwischen dem Feldgerät und dem Leitstellengerät eine Umsetzeinrichtung angeordnet ist, die geeignet ist, Datentelegramme des Feldgerätes, die mit Stationsbeschreibungsdaten eines ersten Stationsbeschreibungsdatensatzes erzeugt worden sind, zu modifizieren und modifizierte Datentelegramme gemäß einem vorgegebenen zweiten Stationsbeschreibungsdatensatz zu erzeugen und an das Leitstellengerät weiterzuleiten, wobei der Gerätebeschreibungsteil des zweiten Stationsbeschreibungsdatensatzes zumindest eine Gerätebeschreibungsangabe aufweist, die in dem ersten Stationsbeschreibungsdatensatz ausschließlich im Topologiebeschreibungsteil enthalten ist. Bezüglich der Vorteile der erfindungsgemäßen Anordnung sei auf die obigen Ausführungen im Zusammenhang mit den erfindungsgemäßen Verfahren verwiesen.

Als Erfindung wird ebenfalls eine Anordnung angesehen, bei der ein Umsetzen von Datentelegrammen unter Verwendung zweier Stationsbeschreibungsdatensätze für eine Datenübertragung von dem Leitstellengerät in Richtung Anlagenstation erfolgt.

Die Erfindung bezieht sich außerdem auf eine Umsetzeinrichtung, die geeignet ist, einen zweiten Stationsbeschreibungsdatensatz durch Modifikation eines ersten Stationsbeschreibungsdatensatzes zu bilden, indem sie in den Gerätebeschreibungsteil des zweiten Stationsbeschreibungsdatensatzes mindestens eine Angabe aufnimmt, die bei dem ersten Stationsbeschreibungsdatensatz ausschließlich in dem Topologiebeschreibungsteil enthalten ist.

Auch wird als Erfindung ein Verfahren angesehen, bei dem mit einem ersten Stationsbeschreibungsdatensatz, der einen die Topologie der Anlagenstation beschreibenden Topologiebeschreibungsteil und einen Gerätebeschreibungsteil, der die zu der Anlagenstation gehörenden Feldgeräte beschreibt, umfasst, ein zweiter Stationsbeschreibungsdatensatz erzeugt wird, wobei in den Gerätebeschreibungsteil des zweiten Stationsbeschreibungsdatensatzes mindestens eine Angabe aufgenommen wird, die bei dem ersten Stationsbeschreibungsdatensatz ausschließlich in dem Topologiebeschreibungsteil enthalten ist. Vorzugsweise erfolgt das Erzeugen des zweiten Stationsbeschreibungsdatensatzes computergestützt bzw. automatisch unter Anwendung mindestens einer vorgegebenen Verknüpfungsregel.

Die Erfindung wird nachfolgend anhand von Ausführungsbeispielen näher erläutert; dabei zeigen beispielhaft:
- Figur 1: ein Ausführungsbeispiel für eine erfindungsgemäße Anordnung mit einem Leitstellengerät, einer Umsetzeinrichtung und einer damit in Verbindung stehenden Anlagenstation mit mindestens einem Feldgerät,
- Figur 2: ein Ausführungsbeispiel für einen ersten Stationsbeschreibungsdatensatz, der einen die Topologie der Anlagenstation beschreibenden Topologiebeschreibungsteil und einen Gerätebeschreibungsteil, der die zu der Anlagenstation gehörenden Feldgeräte beschreibt, umfasst,
- Figur 3: ein Ausführungsbeispiel für einen zweiten Stationsbeschreibungsdatensatz, der nach vorgegebenen Verknüpfungsregeln aus dem ersten Stationsbeschreibungsdatensatz gebildet worden ist,
- Figur 4: ein Ausführungsbeispiel für einen zweiten Stationsbeschreibungsdatensatz, der nach anderen Verknüpfungsregeln aus dem ersten Stationsbeschreibungsdatensatz gebildet worden ist,
- Figur 5: ein Ausführungsbeispiel für einen zweiten Stationsbeschreibungsdatensatz, der nach wiederum anderen Verknüpfungsregeln aus dem ersten Stationsbeschreibungsdatensatz gebildet worden ist,
- Figur 6: ein Ausführungsbeispiel für ein Konfigurationswerkzeug zum Erzeugen des zweiten Stationsbeschreibungsdatensatzes aus dem ersten Stationsbeschreibungsdatensatz und
- Figur 7: ein Ausführungsbeispiel für eine Umsetzeinrichtung, die aus einem ersten Stationsbeschreibungsdatensatz einen zweiten Stationsbeschreibungsdatensatz bilden kann.

In den Figuren werden aus Gründen der Übersicht für identische oder vergleichbare Elemente dieselben Bezugszeichen verwendet.

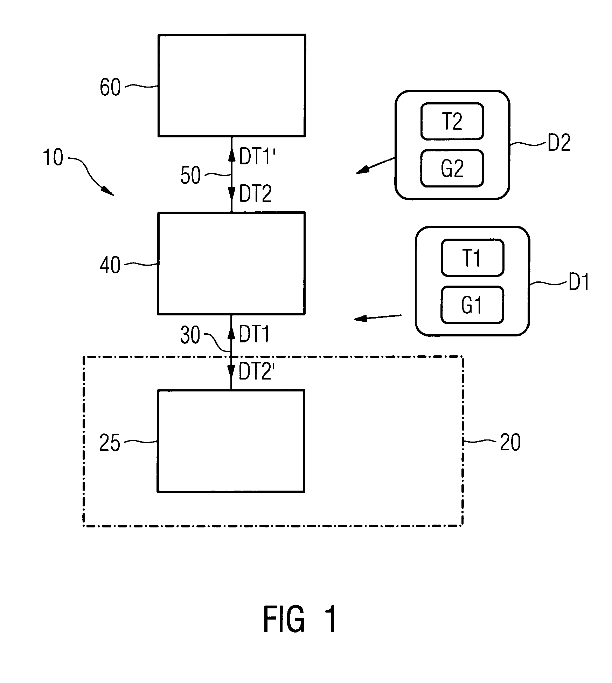

Die Figur 1 zeigt ein Ausführungsbeispiel für ein Stationsautomatisierungssystem 10. Das Stationsautomatisierungssystem 10 weist eine Anlagenstation 20 auf, die ein Feldgerät 25 umfasst und über eine Kommunikationsverbindung 30 mit einer Umsetzeinrichtung 40 verbunden ist. Die Umsetzeinrichtung 40 steht über eine weitere Kommunikationsverbindung 50 außerdem mit einem Leitstellengerät 60 in Verbindung. Die beiden Kommunikationsverbindungen 30 und 50 arbeiten vorzugsweise nach dem IEC 61850-Standard.

Die Anlagenstation 20 wird für den Betrieb der Kommunikationsverbindung 30 zwischen dem Feldgerät 25 und der Umsetzeinrichtung 40 durch einen ersten Stationsbeschreibungsdatensatz D1 beschrieben. Aus dem ersten Stationsbeschreibungsdatensatz D1 ergibt sich das Adressierungsschema, das für den Betrieb der Kommunikationsverbindung 30 und damit für das Erzeugen von Datentelegrammen, die über die Kommunikationsverbindung 30 übertragen werden sollen, herangezogen wird.

Die Anlagenstation 20 wird für den Betrieb der weiteren Kommunikationsverbindung 50 zwischen dem Leitstellengerät 60 und der Umsetzeinrichtung 40 durch einen zweiten Stationsbeschreibungsdatensatz D2 beschrieben. Aus dem zweiten Stationsbeschreibungsdatensatz D2 ergibt sich das Adressierungsschema, das für den Betrieb der weiteren Kommunikationsverbindung 50 und damit für das Erzeugen von Datentelegrammen, die über die weitere Kommunikationsverbindung 50 übertragen werden sollen, herangezogen wird.

Die beiden Stationsbeschreibungsdatensätze D1 und D2 enthalten jeweils einen Topologiebeschreibungsteil T1 bzw. T2, der die Topologie der Anlagenstation 20 beschreibt. Außerdem weisen die beiden Stationsbeschreibungsdatensätze D1 und D2 jeweils einen Gerätebeschreibungsteil G1 bzw. G2 auf, der die zu der Anlagenstation 20 gehörenden Geräte beschreibt. Die beiden Stationsbeschreibungsdatensätze D1 und D2 definieren das jeweilige Adressierungsschema, das für eine Übertragung von Datentelegrammen über die Kommunikationsverbindung 30 bzw. 50 verwendet werden soll. Unterscheiden sich die beiden Stationsbeschreibungsdatensätze D1 und D2, so wird für die Übertragung von Datentelegrammen auf der Kommunikationsverbindung 30 ein anderes Adressierungsschema als für die Übertragung von Datentelegrammen auf der weiteren Kommunikationsverbindung 50 verwendet.

Die Stationsbeschreibungsdatensätze D1 und D2 sind vorzugsweise in der nach dem IEC 61850 Standard definierten Beschreibungssprache SCL ("Substation Configuration Description Language" bzw. Unterstationskonfigurationsbeschreibungssprache) abgefasst.

Die Anordnung gemäß Figur 1 lässt sich vorzugsweise sowohl für eine Datenübertragung vom Feldgerät 25 zum Leitstellengerät 60 als auch für eine Datenübertragung in umgekehrter Richtung verwenden.

Die Funktion der Umsetzeinrichtung 40 besteht dabei darin, Datentelegramme DT1 des Feldgeräts 25, die nach dem Adressierungsschema gemäß dem ersten Stationsbeschreibungsdatensatz D1 adressiert worden sind, zu modifizieren und modifizierte Datentelegramme DT1' zu erzeugen, die nach dem Adressierungsschema gemäß dem zweiten Stationsbeschreibungsdatensatz D2 adressiert werden. Die modifizierten Datentelegramme DT1' werden nachfolgend über die weitere Kommunikationsverbindung 50 zu dem Leitstellengerät 60 übertragen.

In entsprechender Weise besteht die Funktion der Umsetzeinrichtung 40 außerdem darin, Datentelegramme DT2 des Leitstellengeräts 60, die nach dem Adressierungsschema gemäß dem zweiten Stationsbeschreibungsdatensatz D2 adressiert worden sind, zu modifizieren und modifizierte Datentelegramme DT2' zu erzeugen, die nach dem Adressierungsschema gemäß dem ersten Stationsbeschreibungsdatensatz D1 adressiert werden. Die modifizierten Datentelegramme DT2' werden nachfolgend über die Kommunikationsverbindung 30 zu dem Feldgerät 25 übertragen.

Mit anderen Worten führt die Umsetzeinrichtung 40 eine Adressierungsumsetzung durch, so dass die Kommunikationsverbindung 30 mit einem anderen Adressierungsschema betrieben werden kann als die weitere Kommunikationsverbindung 50. Vorzugsweise wird ein Betreiber der Anlage 10 für die Kommunikationsverbindung 30 ein Adressierungsschema wählen, das möglichst "feldgerätenah" ist und einen engen Bezug zu dem Aufbau der Anlagenstation 20 aufweist. Den entsprechenden Stationsbeschreibungsdatensatz D1 wird in der Regel der Hersteller der Anlagenstation 20 zur Verfügung stellen.

Für die weitere Kommunikationsverbindung 50 wird vorzugsweise ein Adressierungsschema gewählt werden, das möglichst funktionsorientiert ist und keinen oder nur wenig Bezug zu den Geräten der Anlagenstation 20 aufweist. Den entsprechenden Stationsbeschreibungsdatensatz D2 wird in der Regel der Betreiber der Anlagenstation 20 bereitstellen.

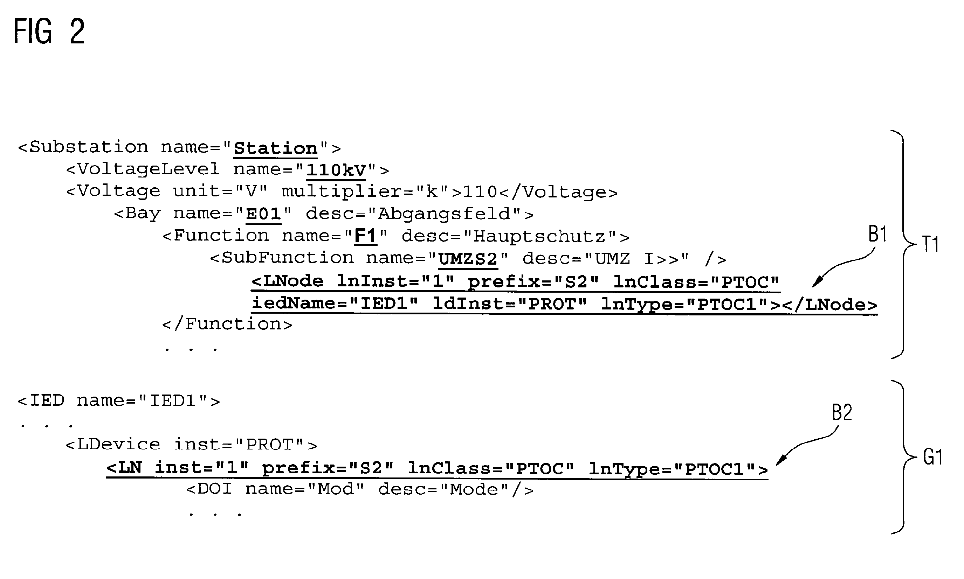

In der Figur 2 ist ein Ausführungsbeispiel für einen Stationsbeschreibungsdatensatz D1 gezeigt. Der Topologiebeschreibungsteil ist mit dem Bezugszeichen T1 und der Gerätebeschreibungsteil mit dem Bezugszeichen G1 gekennzeichnet. Es lässt sich erkennen, dass der Topologiebeschreibungsteil T1 eine funktionsbezogene geräteunabhängige Adressierung nach dem "Functional-Naming-Adressierungsschema" gemäß IEC 61850-6-Standard beschreibt. Außerdem ist ersichtlich, dass der Gerätebeschreibungsteil G1 eine geräteabhängige Adressierung nach dem "Product-Naming-Adressierungsschema" gemäß IEC 61850-Standard verwendet. Durch Bezugsangaben B1 und B2 wird eine Zuordnung zwischen dem Functional-Naming-Adressierungsschema des Topologiebeschreibungsteils T1 und dem ProductNaming-Adressierungsschema des Gerätebeschreibungsteils G1 definiert.

Um zu erreichen, dass auf der weiteren Kommunikationsverbindung 50 zwischen dem Leitstellengerät 60 und der Umsetzeinrichtung 40 eine Adressierung verwendet wird, die einen möglichst nahen Bezug zu dem funktionsbezogenen Topologiebeschreibungsteil T1 aufweist, wird der Stationsbeschreibungsdatensatz D2 vorzugsweise aus bzw. mit dem Stationsbeschreibungsdatensatz D1 gebildet, indem gemäß einer oder mehreren vorgegebenen Verknüpfungsregeln Angaben aus dem Topologiebeschreibungsteil T1 des Stationsbeschreibungsdatensatzes D1 in den Gerätebeschreibungsteil G2 des Stationsbeschreibungsdatensatzes D2 aufgenommen werden. Solche Verknüpfungsregeln können beispielsweise wie folgt lauten:
<IED name>: = <Substation name> und <VoltageLevel name> und <Bay Name>
<LDevice inst>: = <Function name> und <SubFunction name>

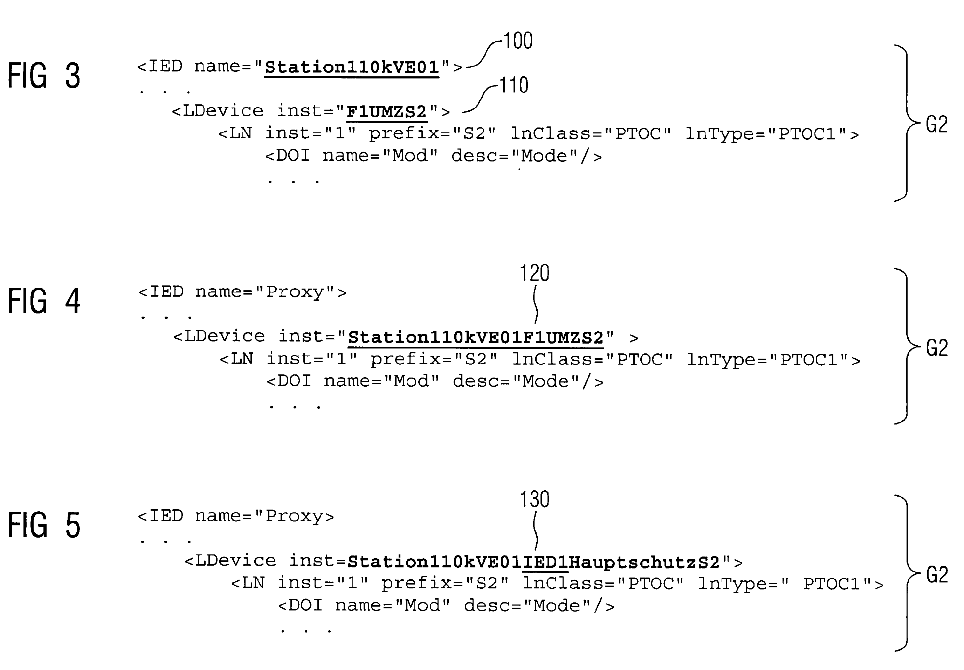

Wie in der Figur 3 ersichtlich ist, wird durch die genannten beiden Verknüpfungsregeln aus dem IED-Namen "IED1" im ersten Stationsbeschreibungsdatensatz D1 im Gerätebeschreibungsteil G2 des zweiten Stationsbeschreibungsdatensatzes D2 der IED-Name "Station110kVE01" (vgl. Bezugszeichen 100); denn im Topologiebeschreibungsteil T1 des ersten Stationsbeschreibungsdatensatzes D1 ist als Unterstationsname (Substation name) "Station", als Spannungslevel (VoltageLevel name) "110kV" und als Feldname (Bay Name) "E01" angegeben. Der Parameter "LDevice inst" wird ebenfalls geändert (vgl. Bezugszeichen 110) und weist anschließend ebenfalls eine Angabe aus dem Topologiebeschreibungsteil T1 des ersten Stationsbeschreibungsdatensatzes D1 auf.

Ein anderes Beispiel für einen Verknüpfungsregelsatz kann beispielsweise lauten:
<IED name>: = "Proxy"
<LDevice inst>: = <Substation name> und <VoltageLevel name> und <Bay Name> und <Function name> und <SubFunction name>
wie dies in der Figur 4 ersichtlich ist. Für den Parameter "LDevice inst" wird somit "Station110kVE01F1UMZS2" (vgl. Bezugszeichen 120) eingetragen, da im Topologiebeschreibungsteil T1 des Stationsbeschreibungsdatensatzes D1 als Unterstationsname "Station", als Spannungslevel "110kV", als Feldname "E01", als Funktionsname (Function name) "F1" und als Unterfunktionsname (SubFunction name) "UMZS2" angegeben ist.

Aus dem IED-Namen "IED1" im Gerätebeschreibungsteil G1 des ersten Stationsbeschreibungsdatensatzes D1 wird im Gerätebeschreibungsteil G2 des zweiten Stationsbeschreibungsdatensatzes D2 der IED-Name "Proxy". Bei dem Beispiel gemäß Figur 4 erfolgt die Bildung des zweiten Stationsbeschreibungsdatensatzes D2 also unter zusätzlicher Berücksichtigung sonstiger Angaben, die nicht in dem ersten Stationsbeschreibungsdatensatz D1 enthalten sind.

Die Figur 5 zeigt ein drittes Ausführungsbeispiel für einen Verknüpfungsregelsatz, dieser lautet:
<IED name>: = "Proxy"
<LDevice inst>: = <Substation name> und <VoltageLevel name> und <Bay Name> und <alter IED-Name aus dem Gerätebeschreibungsteil des Stationsbeschreibungsdatensatzes D1> und <Function desc> und <LN prefix aus dem Gerätebeschreibungsteil des Stationsbeschreibungsdatensatzes D1>

Aus dem IED-Namen "IED1" im Gerätebeschreibungsteil G1 des ersten Stationsbeschreibungsdatensatzes D1 wird somit im zweiten Stationsbeschreibungsdatensatz D2 der IED-Name "Proxy" und für den Parameter "LDevice inst" wird "Station110kVE01IED1HauptschutzS2" eingetragen, da im Topologiebeschreibungsteil T1 des ersten Stationsbeschreibungsdatensatzes D1 als Unterstationsname "Station", als Spannungslevel "110kV", als Feldname "E01", als alter IED-Name "IED1" (vgl. Bezugszeichen 130), als Funktionsbeschreibung (Function desc) "Hauptschutz" angegeben ist. Zusätzlich wird hier "LDevice inst" aus "LN prefix" des Gerätebeschreibungsteils G1 des ersten Stationsbeschreibungsdatensatzes D1 gebildet.

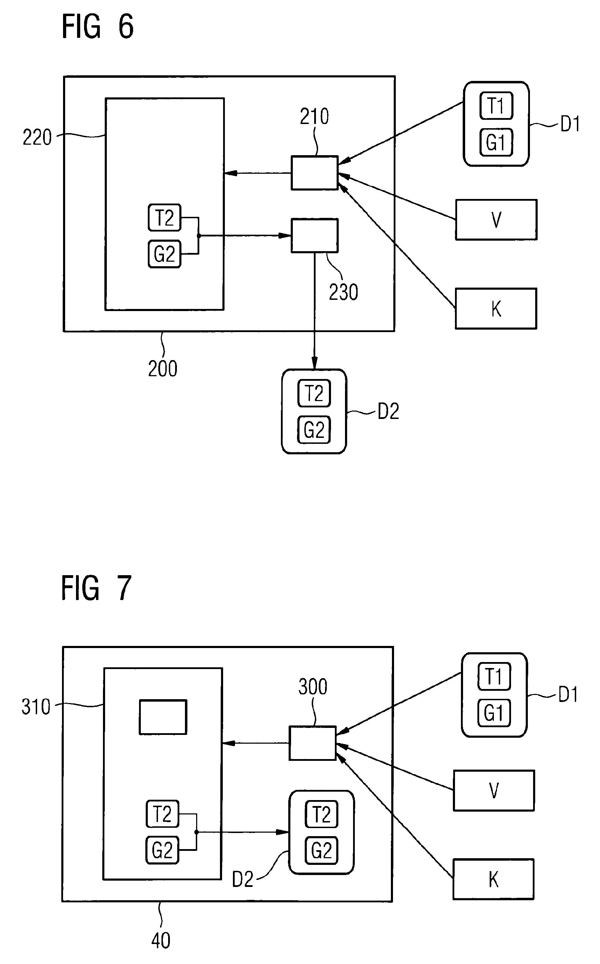

In der Figur 6 ist beispielhaft ein Konfigurationswerkzeug 200 gezeigt, mit dem sich der zweite Stationsbeschreibungsdatensatz D2 aus dem ersten Stationsbeschreibungsdatensatz D1 bilden lässt. Die Anwendung des Verfahrens läuft in folgenden Schritten ab:

Zunächst wird über eine im Konfigurationswerkzeug 200 enthaltene Importfunktion 210 der erste Stationsbeschreibungsdatensatz D1 beispielsweise in Form einer SCL-Datei importiert; diese weist den Gerätebeschreibungsteil G1 und den Topologiebeschreibungsteil T1 auf. Außerdem werden Verknüpfungsregeln V und ggf. Kommunikationseinstellungen K über die Importfunktion 210 importiert.

Nach dem Datenimport werden von einer Konfigurationsapplikation 220 des Konfigurationswerkzeugs 200 die importierten Verknüpfungsregeln V auf den importierten ersten Stationsbeschreibungsdatensatz D1 angewandt sowie die Kommunikationseinstellungen K übernommen. Als Ergebnis wird ein zweiter Stationsbeschreibungsdatensatz D2 erzeugt, beispielsweise in Form einer SCL-Datei, der über eine Exportfunktion 230 des Konfigurationswerkzeugs 200 ausgegeben wird.

Die exportierte SCL-Datei kann danach in die Umsetzeinrichtung 40 gemäß Figur 1 geladen werden, damit diese die weitere Kommunikationsverbindung 50 mit einer Adressierung nach dem zweiten Stationsbeschreibungsdatensatz D2 betreiben kann.

Alternativ kann der zweite Stationsbeschreibungsdatensatz D2 aus bzw. mit dem ersten Stationsbeschreibungsdatensatz D1 auch in der Umsetzeinrichtung 40 erzeugt werden, wie dies beispielhaft die Figur 7 zeigt. Hierzu werden beispielsweise der erste Stationsbeschreibungsdatensatz D1 - z. B. in Form einer SCL-Datei, der den Gerätebeschreibungsteil G1 und den Topologiebeschreibungsteil T1 enthält - die Verknüpfungsregeln V sowie Kommunikationseinstellungen K über die in der Umsetzeinrichtung 40 enthaltene Importfunktion 300 importiert.

Nachfolgend wendet eine Konfigurationsapplikation 310 der Umsetzeinrichtung 40 die importierten Verknüpfungsregeln V auf den ersten Stationsbeschreibungsdatensatz D1 an und erzeugt den zweiten Stationsbeschreibungsdatensatz D2, der für die Kommunikation mit dem Leistellengerät 60 gemäß der Figur 1 verwendet werden kann.

### Bezugszeichenliste

- 10: Stationsautomatisierungssystem
- 20: Anlagenstation
- 25: Feldgerät
- 30: Kommunikationsverbindung
- 40: Umsetzeinrichtung
- 50: Kommunikationseinrichtung
- 60: Leitstellengerät
- 100: Bezugszeichen
- 110: Bezugszeichen
- 120: Bezugszeichen
- 130: Bezugszeichen
- 200: Konfigurationswerkzeug
- 210: Importfunktion
- 220: Konfigurationsapplikation
- 230: Exportfunktion
- 300: Importfunktion
- 310: Konfigurationsapplikation
- B1: Bezugsangabe
- B2: Bezugsangabe
- D1: Stationsbeschreibungsdatensatz
- D2: Stationsbeschreibungsdatensatz
- DT1: Datentelegramm
- DT2: Datentelegramm
- DT1': modifiziertes Datentelegramm
- DT2': modifiziertes Datentelegramm
- G1: Gerätebeschreibungsteil
- G2: Gerätebeschreibungsteil
- K: Kommunikationseinstellung
- T1: Topologiebeschreibungsteil
- T2: Topologiebeschreibungsteil
- V: Verknüpfungsregel

## Patentansprüche

1. Verfahren zum Betreiben einer Anordnung mit einem Leitstellengerät (60) und einer damit in Verbindung stehenden Anlagenstation (20), die mindestens ein Feldgerät (25) umfasst,
- wobei bei dem Verfahren das Feldgerät zu dem Leitstellengerät Datentelegramme (DT1, DT2) unter Heranziehung von Stationsbeschreibungsdaten eines die Anlagenstation beschreibenden Stationsbeschreibungsdatensatzes (D1, D2) sendet und
- wobei der Stationsbeschreibungsdatensatz einen die Topologie der Anlagenstation beschreibenden Topologiebeschreibungsteil (T1, T2), der eine funktionsbezogene geräteunabhängige Adressierung nach dem "Functional-Naming-Adressierungsschema" gemäß IEC 61850-6-Standard beschreibt, und einen Gerätebeschreibungsteil (G1, G2), der die zu der Anlagenstation gehörenden Feldgeräte und eine geräteabhängige Adressierung nach dem so genannten "Product-Naming-Adressierungsschema" gemäß IEC 61850-Standard beschreibt, umfasst,
wobei
- das Feldgerät die Datentelegramme mit Stationsbeschreibungsdaten eines ersten Stationsbeschreibungsdatensatzes (D1) erzeugt, der gemäß dem Standard IEC 61850 abgefasst ist und ein Adressierungsschema angibt, das für den Betrieb einer Kommunikationsverbindung (30) zwischen dem Feldgerät (25) und einer Umsetzeinrichtung (40) herangezogen wird,
- die von dem Feldgerät erzeugten Datentelegramme (DT1) zu der Umsetzeinrichtung (40) geleitet werden, und
- die Umsetzeinrichtung die empfangenen Datentelegramme modifiziert und modifizierte Datentelegramme (DT1') gemäß einem vorgegebenen zweiten Stationsbeschreibungsdatensatz erzeugt (D2), der gemäß dem Standard IEC 61850 abgefasst ist und ein Adressierungsschema angibt, das für den Betrieb einer weiteren Kommunikationsverbindung (50) zwischen der Umsetzeinrichtung und dem Leitstellengerät herangezogen wird,
- wobei der Gerätebeschreibungsteil (G2) des zweiten Stationsbeschreibungsdatensatzes zumindest eine Gerätebeschreibungsangabe aufweist, die in dem ersten Stationsbeschreibungsdatensatz ausschließlich im Topologiebeschreibungsteil (T1) enthalten ist.

2. Verfahren zum Betreiben einer Anordnung mit einem Leitstellengerät und einer damit in Verbindung stehenden Anlagenstation, die mindestens ein Feldgerät umfasst,
- wobei bei dem Verfahren das Leitstellengerät zu dem Feldgerät Datentelegramme unter Heranziehung von Stationsbeschreibungsdaten eines die Anlagenstation beschreibenden Stationsbeschreibungsdatensatzes sendet und
- wobei der Stationsbeschreibungsdatensatz einen die Topologie der Anlagenstation beschreibenden Topologiebeschreibungsteil, der eine funktionsbezogene geräteunabhängige Adressierung nach dem "Functional-Naming-Adressierungsschema" gemäß IEC 61850-6-Standard beschreibt, und einen Gerätebeschreibungsteil, der die zu der Anlagenstation gehörenden Feldgeräte und eine geräteabhängige Adressierung nach dem so genannten "Product-Naming-Adressierungsschema" gemäß IEC 61850-Standard beschreibt, umfasst,
wobei
- das Leitstellengerät die Datentelegramme mit Stationsbeschreibungsdaten eines zweiten Stationsbeschreibungsdatensatzes (D2) erzeugt, der gemäß dem Standard IEC 61850 abgefasst ist und ein Adressierungsschema angibt, das für den Betrieb einer weiteren Kommunikationsverbindung (50) zwischen einer Umsetzeinrichtung (40) und dem Leitstellengerät herangezogen wird,
- die von dem Leitstellengerät erzeugten Datentelegramme zu der Umsetzeinrichtung geleitet werden,
- die Umsetzeinrichtung die empfangenen Datentelegramme modifiziert und modifizierte Datentelegramme (DT2') gemäß einem vorgegebenen ersten Stationsbeschreibungsdatensatz (D1) erzeugt, der gemäß dem Standard IEC 61850 abgefasst ist und ein Adressierungsschema angibt, das für den Betrieb einer Kommunikationsverbindung (30) zwischen dem Feldgerät (25) und der Umsetzeinrichtung (40) herangezogen wird,
- wobei der Gerätebeschreibungsteil des zweiten Stationsbeschreibungsdatensatzes zumindest eine Gerätebeschreibungsangabe aufweist, die in dem ersten Stationsbeschreibungsdatensatz ausschließlich im Topologiebeschreibungsteil enthalten ist.

3. Verfahren nach einem der voranstehenden Ansprüche,
**dadurch gekennzeichnet, dass**
der zweite Stationsbeschreibungsdatensatz durch Modifikation des ersten Stationsbeschreibungsdatensatzes gebildet wird, indem in den Gerätebeschreibungsteil des zweiten Stationsbeschreibungsdatensatzes mindestens eine Angabe aufgenommen wird, die bei dem ersten Stationsbeschreibungsdatensatz ausschließlich in dem Topologiebeschreibungsteil enthalten ist.

4. Verfahren nach einem der voranstehenden Ansprüche,
**dadurch gekennzeichnet, dass**
- der zweite Stationsbeschreibungsdatensatz durch Modifikation des ersten Stationsbeschreibungsdatensatzes außerhalb der Umsetzeinrichtung gebildet wird und
- der gebildete zweite Stationsbeschreibungsdatensatz anschließend in die Umsetzeinrichtung eingespeist wird.

5. Verfahren nach einem der voranstehenden Ansprüche 1-3,
**dadurch gekennzeichnet, dass** der zweite Stationsbeschreibungsdatensatz von der Umsetzeinrichtung gebildet wird.

6. Verfahren nach einem der voranstehenden Ansprüche,
**dadurch gekennzeichnet, dass**
das Bilden des zweiten Stationsbeschreibungsdatensatzes unter Verwendung mindestens einer vorgegebenen Verknüpfungsregel (V) erfolgt, die eine Verknüpfung zwischen dem ersten Stationsbeschreibungsdatensatz und dem zweiten Stationsbeschreibungsdatensatz definiert.

7. Verfahren nach einem der voranstehenden Ansprüche,
**dadurch gekennzeichnet, dass**
eine Anordnung zum Schützen oder Leiten einer elektrischen Schalt- oder Energieversorgungsanlage betrieben wird, wobei es sich bei dem zumindest einen Feldgerät um ein Schutzgerät handelt.

8. Verfahren nach einem der vorangehenden Ansprüche,
**dadurch gekennzeichnet, dass**
in dem Stationsbeschreibungsdatensatz durch zumindest eine Bezugsangabe eine Zuordnung zwischen dem Functional-Naming-Adressierungsschema des Topologiebeschreibungsteils und dem Product-Naming-Adressierungsschema des Gerätebeschreibungsteils definiert wird.

9. Anordnung mit einem Leitstellengerät und einer damit in Verbindung stehenden Anlagenstation, die mindestens ein Feldgerät umfasst,
- wobei das Feldgerät geeignet ist, zu dem Leitstellengerät Datentelegramme unter Heranziehung von Stationsbeschreibungsdaten eines die Anlagenstation beschreibenden Stationsbeschreibungsdatensatzes zu senden, und
- wobei der Stationsbeschreibungsdatensatz einen die Topologie der Anlagenstation beschreibenden Topologiebeschreibungsteil, der eine funktionsbezogene geräteunabhängige Adressierung nach dem "Functional-Naming-Adressierungsschema" gemäß IEC 61850-6-Standard beschreibt, und einen Gerätebeschreibungsteil, der die zu der Anlagenstation gehörenden Feldgeräte und eine geräteabhängige Adressierung nach dem so genannten "Product-Naming-Adressierungsschema" gemäß IEC 61850-Standard beschreibt, umfasst,
wobei
- zwischen dem Feldgerät und dem Leitstellengerät eine Umsetzeinrichtung angeordnet ist, die geeignet ist, Datentelegramme des Feldgerätes, die mit Stationsbeschreibungsdaten eines ersten Stationsbeschreibungsdatensatzes erzeugt worden sind, der gemäß dem Standard IEC 61850 abgefasst ist und ein Adressierungsschema angibt, das für den Betrieb einer Kommunikationsverbindung (30) zwischen dem Feldgerät (25) und der Umsetzeinrichtung (40) herangezogen wird, zu modifizieren und modifizierte Datentelegramme gemäß einem vorgegebenen zweiten Stationsbeschreibungsdatensatz zu erzeugen, der gemäß dem Standard IEC 61850 abgefasst ist und ein Adressierungsschema angibt, das für den Betrieb einer weiteren Kommunikationsverbindung (50) zwischen der Umsetzeinrichtung und dem Leitstellengerät herangezogen wird, und an das Leitstellengerät weiterzuleiten,
- wobei der Gerätebeschreibungsteil des zweiten Stationsbeschreibungsdatensatzes zumindest eine Gerätebeschreibungsangabe aufweist, die in dem ersten Stationsbeschreibungsdatensatz ausschließlich im Topologiebeschreibungsteil enthalten ist.

10. Anordnung mit einem Leitstellengerät und einer damit in Verbindung stehenden Anlagenstation, die mindestens ein Feldgerät umfasst,
- wobei das Leitstellengerät geeignet ist, zu dem Feldgerät Datentelegramme unter Heranziehung von Stationsbeschreibungsdaten eines die Anlagenstation beschreibenden Stationsbeschreibungsdatensatzes zu senden, und
- wobei der Stationsbeschreibungsdatensatz einen die Topologie der Anlagenstation beschreibenden Topologiebeschreibungsteil, der eine funktionsbezogene geräteunabhängige Adressierung nach dem "Functonal-Naming-Adressierungsschema" gemäß IEC 61850-6-Standard beschreibt, und einen Gerätebeschreibungsteil, der die zu der Anlagenstation gehörenden Feldgeräte und eine geräteabhängige Adressierung nach dem so genannten "Product-Naming-Adressierungsschema" gemäß IEC 61850-Standard beschreibt, umfasst,
wobei
- zwischen dem Feldgerät und dem Leitstellengerät eine Umsetzeinrichtung angeordnet ist, die geeignet ist, Datentelegramme des Leitstellengerätes, die mit Stationsbeschreibungsdaten eines zweiten Stationsbeschreibungsdatensatzes erzeugt worden sind, der gemäß dem Standard IEC 61850 abgefasst ist und ein Adressierungsschema angibt, das für den Betrieb einer weiteren Kommunikationsverbindung (50) zwischen der Umsetzeinrichtung und dem Leitstellengerät herangezogen wird, zu modifizieren und modifizierte Datentelegramme gemäß einem vorgegebenen ersten Stationsbeschreibungsdatensatz zu erzeugen, der gemäß dem Standard IEC 61850 abgefasst ist und ein Adressierungsschema, das für den Betrieb einer Kommunikationsverbindung (30) zwischen dem Feldgerät (25) du der Umsetzeinrichtung (40) herangezogen wird, und an das Feldgerät weiterzuleiten,
- wobei der Gerätebeschreibungsteil des zweiten Stationsbeschreibungsdatensatzes zumindest eine Gerätebeschreibungsangabe aufweist, die in dem ersten Stationsbeschreibungsdatensatz ausschließlich im Topologiebeschreibungsteil enthalten ist.

11. Anordnung nach einem der voranstehenden Ansprüche 9-10, **dadurch gekennzeichnet, dass** eine Anordnung zum Schützen oder Leiten einer elektrischen Schalt- oder Energieversorgungsanlage betrieben wird, wobei es sich bei dem zumindest einen Feldgerät um ein Schutzgerät handelt.

12. Umsetzeinrichtung für eine Anordnung nach einem der Ansprüche 9-11,
wobei
- die Umsetzeinrichtung geeignet ist, einen zweiten Stationsbeschreibungsdatensatz, der gemäß dem Standard IEC 61850 abgefasst ist und ein Adressierungsschema angibt, das für den Betrieb einer weiteren Kommunikationsverbindung (50) zwischen der Umsetzeinrichtung und einem Leitstellengerät herangezogen wird, durch Modifikation eines ersten Stationsbeschreibungsdatensatzes, der gemäß dem Standard IEC 61850 abgefasst ist und ein Adressierungsschema angibt, das für den Betrieb einer Kommunikationsverbindung (30) zwischen einem Feldgerät (25) und der Umsetzeinrichtung (40) herangezogen wird, der einen die Topologie einer Anlagenstation beschreibenden Topologiebeschreibungsteil, der eine funktionsbezogene geräteunabhängige Adressierung nach dem" Functional-Naming-Adressierungsschema" gemäß IEC 61850-6-Standard beschreibt, und einen Gerätebeschreibungsteil, der die zu der Anlagenstation gehörenden Feldgeräte und eine geräteabhängige Adressierung nach dem so genannten "Product-Naming-Adressierungsschema" gemäß IEC 61850-Standard beschreibt, umfasst, zu bilden, indem sie in den Gerätebeschreibungsteil des zweiten Stationsbeschreibungsdatensatzes mindestens eine Angabe aufnimmt, die bei dem ersten Stationsbeschreibungsdatensatz ausschließlich in dem Topologiebeschreibungsteil enthalten ist.

13. Verfahren zum Erzeugen eines Stationsbeschreibungsdatensatzes,
wobei
- mit einem ersten Stationsbeschreibungsdatensatz, der gemäß dem Standard IEC 61850 abgefasst ist und ein Adressierungsschema angibt, das für den Betrieb einer Kommunikationsverbindung (30) zwischen einem Feldgerät (25) und einer Umsetzeinrichtung (40) herangezogen wird, der einen die Topologie einer Anlagenstation beschreibenden Topologiebeschreibungsteil, der eine funktionsbezogene geräteunabhängige Adressierung nach dem "Functional-Naming-Adressierungsschema" gemäß IEC 61850-6-Standard beschreibt, und einen Gerätebeschreibungsteil, der die zu der Anlagenstation gehörenden Feldgeräte und eine geräteabhängige Adressierung nach dem so genannten "Product-Naming-Adressierungsschema" gemäß IEC 61850-Standard beschreibt, umfasst, ein zweiter Stationsbeschreibungsdatensatz, der gemäß dem Standard IEC 61850 abgefasst ist und ein Adressierungsschema angibt, das für den Betrieb einer weiteren Kommunikationsverbindung (50) zwischen der Umsetzeinrichtung und dem Leitstellengerät herangezogen wird, erzeugt wird,
- wobei in den Gerätebeschreibungsteil des zweiten Stationsbeschreibungsdatensatzes mindestens eine Angabe aufgenommen wird, die bei dem ersten Stationsbeschreibungsdatensatz ausschließlich in dem Topologiebeschreibungsteil enthalten ist.

## Claims

1. Method for operating an arrangement having a control station device (60) and a system station (20) which is connected thereto and comprises at least one field device (25),
- wherein in the method the field device transmits data telegrams (DT1, DT2) to the control station device using station description data of a station description data set (D1, D2) which describes the system station, and
- wherein the station description data set comprises a topology description part (T1, T2) which describes the topology of the system station and describes function-related, device-independent addressing according to the "functional naming addressing scheme" in accordance with IEC 61850-6 standard, and a device description part (G1, G2) which describes the field devices associated with the system station and device-dependent addressing according to what is referred to as the "product-naming addressing scheme" in accordance with IEC 61850 standard,
wherein
- the field device generates the data telegrams with station description data of a first station description data set (D1) which is compiled in accordance with the standard IEC 61850 and specifies an addressing scheme which is used to operate a communication link (30) between the field device (25) and a conversion device (40),
- the data telegrams (DT1) which are generated by the field device are conducted to the conversion device (40), and
- the conversion device modifies the received data telegrams and generates modified data telegrams (DT1') in accordance with a predefined second station description data set (D2) which is compiled in accordance with the standard IEC 61850 and specifies an addressing scheme which is used to operate a further communication link (50) between the conversion device and the control station device,
- wherein the device description part (G2) of the second station description data set has at least one device description indication which is contained exclusively in the topology description part (T1) in the first station description data set.

2. Method for operating an arrangement having a control station device and a system station which is connected thereto and comprises at least one field device,
- wherein in the method the control station device transmits data telegrams to the field device using station description data of a station description data set which describes the system station, and
- wherein the station description data set comprises a topology description part which describes the topology of the system station and describes function-related, device-independent addressing according to the "functional naming addressing scheme" in accordance with IEC 61850-6 standard, and a device description part which describes the field devices associated with the system station and device-dependent addressing according to what is referred to as the "product naming addressing scheme" in accordance with IEC 61850 standard,
wherein
- the control station device generates the data telegrams with station description data of a second station description data set (D2) which is compiled in accordance with the standard IEC 61850 and specifies an addressing scheme which is used to operate a further communication link (50) between a conversion device (40) and the control station device,
- the data telegrams which are generated by the control station device are conducted to the conversion device,
- the conversion device modifies the received data telegrams and generates modified data telegrams (DT2') in accordance with a predefined first station description data set (D1) which is compiled in accordance with the standard IEC 61850 and specifies an addressing scheme which is used to operate a communication link (30) between the field device (25) and the conversion device (40),
- wherein the device description part of the second station description data set has at least one device description indication which is contained exclusively in the topology description part in the first station description data set.

3. Method according to one of the preceding claims,
**characterized in that**
the second station description data set is formed by modifying the first station description data set by including, in the device description part of the second station description data set, at least one indication which is contained exclusively in the topology description part in the first station description data set.

4. Method according to one of the preceding claims,
**characterized in that**
- the second station description data set is formed by modifying the first station description data set outside the conversion device, and
- the second station description data set which is formed is subsequently fed into the conversion device.

5. Method according to one of the preceding Claims 1-3,
**characterized in that**
the second station description data set is formed by the conversion device.

6. Method according to one of the preceding claims,
**characterized in that**
the second station description data set is formed using at least one predefined logic combination rule (V) which defines a logic combination between the first station description data set and the second station description data set.

7. Method according to one of the preceding claims,
**characterized in that**
an arrangement for protecting or controlling an electric switching or energy supply system is operated, wherein the at least one field device is a protection device.

8. Method according to one of the preceding claims,
**characterized in that**
a reference indication in the station description data set defines an assignment between the functional naming addressing scheme of the topology description part and the product naming addressing scheme of the device description part.

9. Arrangement having a control station device and a system station which is connected thereto and comprises at least one field device,
- wherein the field device is suitable for transmitting data telegrams to the control station device using station description data of a station description data set which describes the system station, and
- wherein the station description data set comprises a topology description part which describes the topology of the system station and describes function-related, device-independent addressing according to the "functional naming addressing scheme" in accordance with IEC 61850-6 standard, and a device description part which describes the field devices associated with the system station and device-dependent addressing according to what is referred to as the "product naming addressing scheme" in accordance with IEC 61850 standard,
wherein
- arranged between the field device and the control station device is a conversion device which is suitable for modifying data telegrams of the field device which have been generated with station description data of a first station description data set which is compiled in accordance with the standard IEC 61850 and specifies an addressing scheme which is used to operate a communication link (30) between the field device (25) and the conversion device (40), and said conversion device is suitable for generating modified data telegrams in accordance with a predefined second station description data set which is compiled in accordance with the standard IEC 61850 and specifies an addressing scheme which is used to operate a further communication link (50) between the conversion device and the control station device, and for passing said data telegrams on to the control station device,
- wherein the device description part of the second station description data set has at least one device description indication which is contained exclusively in the topology description part in the first station description data set.

10. Arrangement having a control station device and a system station which is connected thereto and comprises at least one field device,
- wherein the control station device is suitable for transmitting data telegrams to the field device using station description data of a station description data set which describes the system station, and
- wherein the station description data set comprises a topology description part which describes the topology of the system station and describes function-related, device-independent addressing according to the "functional naming addressing scheme" in accordance with IEC 61850-6 standard, and a device description part which describes the field devices associated with the system station and device-dependent addressing according to what is referred to as the "product naming addressing scheme" in accordance with IEC 61850 standard,
wherein
- arranged between the field device and the control station device is a conversion device which is suitable for modifying data telegrams of the control station device which have been generated with station description data of a second station description data set which is compiled in accordance with the standard IEC 61850 and specifies an addressing scheme which is used to operate a further communication link (50) between the conversion device and the control station device, and said conversion device is suitable for generating modified data telegrams in accordance with a predefined first station description data set which is compiled in accordance with the standard IEC 61850, and an addressing scheme which is used to operate a communication link (30) between the field device (25) and the conversion device (40), and for passing said data telegrams on to the field device,
- wherein the device description part of the second station description data set has at least one device description indication which is contained exclusively in the topology description part in the first station description data set.

11. Arrangement according to one of the preceding Claims 9-10,
**characterized in that**
an arrangement for protecting or controlling an electric switching or energy supply system is operated, wherein the at least one field device is a protection device.

12. Conversion device for an arrangement according to one of Claims 9-11,
wherein
- the conversion device is suitable for forming a second station description data set, which is compiled in accordance with the standard IEC 61850 and specifies an addressing scheme which is used to operate a further communication link (50) between the conversion device and a control station device, by modifying a first station description data set which is compiled in accordance with the standard IEC 61850, and specifies an addressing scheme which is used to operate a communication link (30) between a field device (25) and the conversion device (40), which station description data set comprises a topology description part which describes the topology of a system station and describes function-related, device-independent addressing according to the "functional naming addressing scheme" in accordance with IEC 61850-6 standard, and a device description part which describes the field devices associated with the system station and device-dependent addressing according to what is referred to as the "product naming addressing scheme" in accordance with IEC 61850 standard in that said conversion device includes, in the device description part of the second station description data set, at least one indication which is contained exclusively in the topology description part in the first station description data set.

13. Method for generating a station description data set,
wherein
- having a first station description data set which is compiled in accordance with the standard IEC 61850 and specifies an addressing scheme which is used to operate a communication link (30) between a field device (25) and a conversion device (40), which station description data set comprises a topology description part which describes the topology of a system station and describes function-related, device-independent addressing according to the "functional naming addressing scheme" in accordance with IEC 61850-6 standard, and a device description part which describes the field devices associated with the system station and describes device-dependent addressing according to what is referred to as the "product naming addressing scheme" in accordance with IEC 61850 standard, a second station description data set which is compiled in accordance with the standard IEC 61850 and specifies an addressing scheme, which is used to operate a further communication link (50) between the conversion device and the control station device, is generated,
- wherein at least one indication is included in the device description part of the second station description data set, said indication being contained exclusively in the topology description part in the first station description data set.

## Revendications

1. Procédé pour faire fonctionner un système comprenant un appareil (60) de centre de commande et un poste (20) d'installation qui est en liaison avec lui et qui comprend au moins un appareil (25) de terrain,
- dans lequel, suivant le procédé, l'appareil de terrain envoie à l'appareil de centre de commande des télégrammes (DT1, DT2) de données en tirant partie de donnés décrivant le poste d'un jeu (D1, D2) de donnés décrivant l'installation, et
- dans lequel le jeu de données décrivant le poste comprend une partie (T1, T2) de description de topologie qui décrit la topologie du poste d'installation et qui donne un adressage se rapportant à la fonction et indépendant de l'appareil suivant le « schéma d'adressage Functional-Naming » selon la norme IEC 61850-6 et une partie (G1, G2) de description d'appareil qui décrit les appareils de terrain appartenant au poste d'installation et qui donne un adressage qui dépend de l'appareil suivant la norme dite « schéma d'adressage Product-Naming » selon la norme IEC 61850,
dans lequel
- l'appareil de terrain produit les télégrammes de données ayant des données de description de poste d'un premier jeu (D1) de données de description de poste qui est conçu selon la norme IEC 61850 et indique un schéma d'adressage qui est mis à profit pour faire fonctionner une liaison (30) de communication entre l'appareil (25) de terrain et un dispositif (40) de conversion,
- les télégrammes (DT1) de données produits par l'appareil de terrain sont envoyés au dispositif (40) de conversion, et
- le dispositif de conversion modifie les télégrammes de données reçus et produit des télégrammes (DT1') de données modifiés suivant un deuxième jeu (D2) de données de description de poste donné à l'avance qui est conçu suivant la norme IEC 61850 et indique un schéma d'adressage qui est mis à profit pour faire fonctionner une autre liaison (50) de communication entre le dispositif de conversion et l'appareil de centre de commande,
- dans lequel la partie (G2) de description d'appareil du deuxième jeu de données de description de poste a au moins une indication de description d'appareil qui est contenue dans le premier jeu de données de description de poste exclusivement dans la partie (T1) de description de topologie.

2. Procédé pour faire fonctionner un système comprenant un appareil de centre de commande et un poste d'installation qui est en liaison avec lui et qui comprend au moins un appareil de terrain,
- dans lequel, suivant le procédé, l'appareil de terrain envoie à l'appareil de centre de commande des télégrammes de données en tirant partie de donnés décrivant le poste d'un jeu de donnés décrivant l'installation, et
- dans lequel le jeu de données décrivant le poste comprend une partie de description de topologie qui décrit la topologie du poste d'installation et qui donne un adressage se rapportant à la fonction et indépendant de l'appareil suivant le schéma d'adressage "Functional-Naming" selon la norme IEC 61850-6 et une partie de description d'appareil qui décrit les appareils de terrain appartenant au poste d'installation et qui donne un adressage qui dépend de l'appareil suivant la norme dite schéma d'adressage "Product-Naming" selon la norme IEC 61850,
dans lequel
- l'appareil de centre de commande produit les télégrammes de données ayant des données de description de poste d'un deuxième jeu de données (D2) de description de poste qui est conçu selon la norme IEC 61850 et qui indique un schéma d'adressage qui est mis à profit pour faire fonctionner une autre liaison (50) de communication entre un dispositif (40) de conversion et l'appareil de centre de commande,
- les télégrammes de données produits par l'appareil de centre de commande sont envoyés au dispositif de conversion,
- le dispositif de conversion modifie les télégrammes de données reçus et produit des télégrammes (DT2') de données modifiés suivant un premier jeu (D1) de données de description de poste donnés à l'avance qui est conçu selon la norme IEC 61850 et qui indique un schéma d'adressage qui est mis à profit pour faire fonctionner une liaison (30) de communication entre l'appareil (25) de terrain et le dispositif (40) de conversion,
- dans lequel la partie de description d'appareil du deuxième jeu de données de description de poste a au moins une indication de description de l'appareil qui est contenue dans le premier jeu de données de description de poste exclusivement dans la partie de description de topologie.

3. Procédé suivant l'une des revendications précédentes,
**caractérisé en ce que**
le deuxième jeu de données de description de poste est formé par modification du premier jeu de données de description de poste en enregistrant, dans la partie de description d'appareil du deuxième jeu de données de description de poste, au moins une indication qui, dans le premier jeu de données de description de poste, est contenue exclusivement dans la partie de description de topologie.

4. Procédé suivant l'une des revendications précédentes,
**caractérisé en ce que**
- le deuxième jeu de données de description de poste est formé par modification du premier jeu de données de description de poste en dehors du dispositif de conversion, et
- le deuxième jeu de données de description de poste formé est mémorisé ensuite dans le dispositif de conversion.

5. Procédé suivant l'une des revendications précédentes 1 à 3,
**caractérisé en ce que**
le deuxième jeu de données de description de poste est formé par le dispositif de conversion.

6. Procédé suivant l'une des revendications précédentes,
**caractérisé en ce que**
la formation du deuxième jeu de données de description de poste s'effectue en utilisant au moins une règle (V) de combinaison donnée à l'avance qui définit une combinaison entre le premier jeu de données de description de poste et le deuxième jeu de données de description de poste.

7. Procédé suivant l'une des revendications précédentes,
**caractérisé en ce que**
l'on fait fonctionner une système de protection ou de commande d'une installation de distribution ou d'alimentation d'énergie électrique, le au moins un appareil de terrain étant un appareil de protection.

8. Procédé suivant l'une des revendications précédentes,
**caractérisé en ce que**
il est défini dans le jeu de données de description de poste par au moins une indication de référence une association entre le schéma d'adressage "Functional-Naming" de la partie de description de topologie et le schéma d'adressage "Product-Naming" de la partie de description d'appareil.

9. Système ayant un appareil de centre de commande et un poste d'installation en liaison avec lui et comprenant au moins un appareil de terrain,
- dans lequel l'appareil de terrain est propre à envoyer à l'appareil de centre de commande des télégrammes de données en tirant parti de données de description de poste d'un jeu de données de description de poste décrivant le poste d'installation, et
- dans lequel le jeu de données de description de poste comprend une partie de description de topologie décrivant la topologie du poste d'installation qui donne un adressage rapporté à la fonction et indépendant de l'appareil suivant le schéma d'adressage "Functional-Naming" selon la norme IEC 61850-6 et une partie de description d'appareil qui décrit les appareils de terrain appartenant au poste d'installation et un adressage dépendant de l'appareil suivant le schéma d'adressage "Product-Naming" selon la norme IEC 61850-6,
dans lequel
- entre l'appareil de terrain et l'appareil de centre de commande, est disposé un dispositif de conversion qui est propre à modifier des télégrammes de données de l'appareil de terrain qui ont produites par des données de description de poste d'un premier jeu de données de description de poste conçu selon la norme IEC 61850 et indique un schéma d'adressage qui est mis à profit pour faire fonctionner une liaison (30) de communication entre l'appareil (25) de terrain et le dispositif (40) de conversion et pour produire des télégrammes de données modifiés suivant un deuxième jeu de données de description de poste données à l'avance qui est conçu selon la norme IEC 61850 et indique un schéma d'adressage qui est mis à profit pour faire fonctionner une autre liaison (50) de communication entre le dispositif de conversion et l'appareil de centre de commande et l'acheminer à l'appareil de centre de commande,
- dans lequel la partie de description d'appareil du deuxième jeu de données de description de poste a au moins une indication de description d'appareil qui est contenue dans le premier jeu de données de description de poste exclusivement dans la partie de description de topologie.

10. Système ayant un appareil de centre de commande et un poste d'installation en liaison avec lui et comprenant au moins un appareil de terrain,
- dans lequel l'appareil de centre de commande est propre à envoyer à l'appareil de terrain des télégrammes de données en tirant parti de données de description de poste d'un jeu de données de description de poste décrivant le poste d'installation, et
- dans lequel le jeu de données de description de poste comprend une partie de description de topologie, décrivant la topologie du poste d'installation qui décrit un adressage rapporté à la fonction et indépendant de l'appareil suivant le schéma d'adressage "Functional-Naming" selon la norme IEC 61850-6, et une partie de description d'appareil qui décrit les appareils de terrain appartenant au poste d'installation et un adressage dépendant de l'appareil suivant le schéma d'adressage "Product-Naming" selon la norme IEC 61850,
dans lequel
- entre l'appareil de terrain et l'appareil de centre de commande, est disposé un dispositif de conversion qui est propre à modifier des télégrammes de données de l'appareil de centre de commande qui ont été produites par des données de description de poste d'un deuxième jeu de données de description de poste, qui est conçu suivant la norme IEC 61850 et qui indique un schéma d'adressage qui est mis à profit pour faire fonctionner une autre liaison (50) de communication entre le dispositif de conversion et l'appareil de centre de commande et pour produire des télégrammes de données modifiés suivant un premier jeu de données de description de poste donné à l'avance qui est conçu suivant la norme IEC 61850 et un schéma d'adressage qui est mis à profit pour faire fonctionner une liaison (30) de communication entre l'appareil (25) de terrain et le dispositif (40) de conversion et l'acheminer à l'appareil de terrain,
- dans lequel la partie de description d'appareil du deuxième jeu de données de description de poste a au moins une indication de description d'appareil qui est contenue dans le premier jeu de données de description de poste exclusivement dans la partie de description de topologie.

11. Système suivant l'une des revendications précédentes 9 à 10,
**caractérisé en ce que**
on fait fonctionner un système de protection ou de conduite d'une installation de distribution ou d'alimentation d'énergie électrique, le au moins un appareil de terrain étant un appareil de protection.

12. Dispositif de conversion pour un système suivant l'une des revendications 9 à 11,
dans lequel
- le dispositif de conversion est propre à former un deuxième jeu de données de description de poste qui est conçu selon la norme IEC 61850 et indique un schéma d'adressage qui est mis à profit pour faire fonctionner une autre liaison (50) de communication entre le dispositif de conversion et un appareil de centre de conduite par modification d'un premier jeu de données de description de poste qui est conçu suivant la norme IEC 61850 et qui indique un schéma d'adressage qui est mis à profit pour faire fonctionner une liaison (30) de communication entre un appareil (25) de terrain et le dispositif (40) de conversion, qui comprend une partie de description de topologie décrivant la topologie d'un poste d'installation et décrivant un adressage se rapportant à la fonction et indépendant de l'appareil suivant le « schéma d'adressage Functional-Naming » selon la norme IEC 61850-6 et une partie de description d'appareil qui décrit les appareils de terrain appartenant au poste d'installation et un adressage dépendant de l'appareil suivant le « schéma d'adressage Product-Naming » selon la norme IEC 61850 en enregistrant, dans la partie de description d'appareil du deuxième jeu de données de description de poste, au moins une indication qui est contenue dans le premier jeu de données de description de poste exclusivement dans la partie de description de topologie.

13. Procédé de production d'un jeu de données de description de poste,
dans lequel
- on produit, par un premier jeu de données de description de poste, qui est conçu selon la norme IEC 61850 et qui indique un schéma d'adressage qui est mis à profit pour faire fonctionner une liaison (30) de communication entre un appareil (25) de terrain et un dispositif de conversion qui comprend une partie de description de topologie décrivant la topologie d'un poste d'installation qui décrit un adressage se rapportant à la fonction et indépendant de l'appareil suivant le « schéma d'adressage Functional-Naming » selon la norme IEC 61850-6 et une partie de description d'appareil qui décrit des appareils de terrain appartenant au poste d'installation et un adressage dépendant de l'appareil suivant le « schéma d'adressage Product-Naming » selon la norme IEC 61850, on produit un deuxième jeu de données de description de poste qui est conçu selon la norme IEC 61850 et qui indique un schéma d'adressage qui est mis à profit pour faire fonctionner une autre liaison (50) de communication entre le dispositif de conversion et l'appareil de centre de commande,
- dans lequel il est enregistré dans la partie de description d'appareil du deuxième jeu de données de description de poste au moins une indication qui est contenue dans le premier jeu de données de description de poste exclusivement dans la partie de description de topologie.
